# EUROPÄISCHE PATENTSCHRIFT

(11) **EP 0 425 628 B1**
(45) Veröffentlichungstag und Bekanntmachung des Hinweises auf die Patenterteilung: **03.04.1996**
(21) Anmeldenummer: 90907030.2
(22) Anmeldetag: 16.05.1990
(51) Int. Cl.: H01H 3/14

(54) **SICHERHEITSPUFFER**
SAFETY BUMPER
PARE-CHOCS DE SECURITE

(30) Priorität: 16.05.1989 DE 3915931
(43) Veröffentlichungstag der Anmeldung: 08.05.1991
(73) Patentinhaber: Mayser GmbH & Co., D-89073 Ulm (DE)
(72) Erfinder: BUTTNER, Manfred, D-7905 Dietenheim (DE); BUCHIEN, Fritz, D., D-7933 Schelklingen (DE)
(74) Vertreter: Wilhelm & Dauster Patentanwälte European Patent Attorneys
(86) Internationale Anmeldenummer: EP9000786
(87) Internationale Veröffentlichungsnummer: WO9014677

(56) Entgegenhaltungen:
- DE-A- 3 009 112
- DE-A- 3 427 771
- DE-U- 1 996 978
- GB-A- 1 369 174
- US-A- 3 133 167
- US-A- 4 293 752

## Beschreibung

Die Erfindung betrifft einen Sicherheitspuffer, mit einem aus elastischem Schaumstoff bestehenden Pufferkörper, mit einer Trägerplatte und einer elektrischen Schalteinrichtung in der Form einer streifenförmigen und bei äußerem Druck auf den Pufferkörper schaltenden Kontaktanordnung.

Es sind Sicherheitspuffer dieser Art bekannt (Prospekt Safety Bumper der MAYSER Polymer Electric, Druckvermerk SB/5/2.89/D). Sicherheitspuffer dieser Art dienen beispielsweise dazu, an Robotern oder an fahrerlosen Transportsystemen angebracht zu werden, um einen sofortigen Stillstand solcher Geräte zu bewirken, wenn diese beispielsweise in nicht vorhergesehener Weise in Berührung mit Personen kommen. Der Vorteil solcher "Safety Bumper" liegt dabei darin, daß solche Abschalteinrichtungen wegen der Ausbildung des Schaumstoffpuffers keine scharfen Kanten aufweisen und auch nicht verbogen werden können.

Bei den bekannten Bauarten ist die Ausgestaltung so getroffen, daß die Schalteinrichtung aus zwei flexiblen Streifen besteht, von denen einer in der Regel unmittelbar an einer an der Rückseite des Sicherheitspuffers angeordneten Trägerplatte befestigt ist, während der andere am Schaumstoff-Pufferkörper in entsprechenden Abstand zum ersten Streifen in dem dafür geschaffenen Hohlraum angeordnet ist. Da die Schaumstoffkörper in der Regel nach vorne von einer luft- und wasserdichten Haut überzogen sind, ist es notwendig, die Trägerplatten nach hinten offen zu lassen,damit sich der Schaumstoff, der als elastisches Element für die Annäherung und Entfernung der Schaltstreifen dient, in der gewünschten Weise durch Abgabe eines Teiles seines Luftvolumens zusammendrücken läßt und vor allen Dingen durch die zurückströmende Luft wieder den Ausgangszustand einnehmen kann, der vor einer Verformung vorhanden war. Sicherheitspuffer dieser Art lassen sich daher dort, wo starke Luftverschmutzung oder hohe Feuchtigkeit vorliegt, nur bedingt einsetzen, weil die relativ empfindlichen Schaltstreifen in unerwünschter Weise beeinflußt werden. Dazu kommt, daß die Befestigung eines der Schaltstreifen am Schaumstoffkörper eine relativ aufwendige Herstellung erforderlich macht.

Aus der DE 34 27 771 A1 ist eine Anordnung bekannt, die mit einem aus elastischem Schaumstoff bestehenden Pufferkörper versehen ist. Dort ist als Schalteinrichtung eine sogenannte Domschaltfolie vorgesehen, die aus mehreren aneinandergereihten einzelnen Domfolienschaltern bestehen. Zu beiden Seiten dieser Domschalterfolie verlaufen dünne Leiterbahnen, zwischen denen an die Leiterbahnen angeformte Kontaktabschnitte Schaltelemente bilden. Die Domfolienschalter sind in einem geschlossenen Hohlprofil angeordnet, so daß die in jener Druckschrift gezeigte Bauart eine in sich als geschlossen anzusehende Schaltleiste bildet. Solche Bauarten sind aber relativ empfindlich.

Der Erfindung liegt die Aufgabe zugrunde, einen Sicherheitspuffer der eingangs genannten Art so auszubilden, daß die Einrichtung unempfindlicher gegen äußere Einflüsse wird und einfacher herstellbar ist.

Zur Lösung dieser Aufgabe werden bei einem Sicherheitspuffer der eingangs genannten Art die kennzeichnenden Merkmale des Patentanspruches 1 vorgesehen. Durch diese Ausgestaltung übernimmt der Schaumstoff nur noch Stoßdämpferfunktion und übt an den Stellen, wo er von außen gedrückt wird, eine Kraftwirkung auf die Druckleiste aus, die sich an dieser Stelle elastisch durchbiegt. Sie berührt die in sich vollkommen abgedichtete Schaltleiste zur Kontaktgabe. Die elastische Druckleiste stellt sich selbsttätig wieder zurück. Sie bildet bei der erfindungsgemäßen Ausgestaltung das elastische Rückstellelement, das bei bekannten Anordnungen von dem Schaumstoff gebildet wurde. Durch die neue Ausgestaltung kann die Kontaktgabe nicht durch Umwelteinflüsse (staubige oder feuchte Luft) nachteilig beeinflusst werden, weil der Kontakt innerhalb der Schaltleiste erfolgt, die abgedichtet ist. Trotzdem wird eine feinfühlige Auslösung beibehalten. Die elastische Druckleiste sorgt jeweils für den erforderlichen Schaltdruck. Dabei ist vorteilhaft, daß die Schaltleiste innerhalb eines von festen Wänden umgebenen Hohlraumes angeordnet ist, der mit der die Schaltleiste tragenden Trägerplatte fest verbunden ist.

Eine weitgehende Vormontage wird dadurch ermöglicht und es wird eine robuste Ausführung geschaffen.

Es ist vorteilhaft nach den Merkmalen des Anspruches 2, die Druckleiste mit Erhebungen zur Kontaktierung der Schaltleiste zu versehen, weil auf diese Weise die örtlichen Druckkräfte auf die Schaltleiste erhöht werden können und dadurch die Sicherheit für das Auslösen eines Schaltvorganges größer wird. Jede Durchbiegung der Druckleiste führt daher, wenn die Abstände der Stege entsprechend gewählt sind, zu einer Art Punktberührung der Druckleiste, die den gewünschten Schaltvorgang sicher auslöst.

Eine ganz besonders vorteilhafte Ausführungsform der Erfindung ist im Anspruch 3 gekennzeichnet. Der Rahmen wird hierbei gleichzeitig auch als Halterung für die Druckleiste ausgenützt, so daß die komplette Schalteinrichtung, bestehend aus Schaltleiste, Trägerplatte, Rahmen und Druckleiste ohne den Schaumstoffkörper vormontiert werden kann. Die Merkmale der Ansprüche 5 und 6 bieten dabei den Vorteil, daß trotz der Anlage der Druck leiste an der Unterkante des Randes des Rahmens eine satte Berührung mit dem Schaumstoffkörper erfolgt, der nach Anspruch 7 unmittelbar auf den Rand aufgeklebt werden kann.

Die Merkmale der Ansprüche 8 und 9 erlauben eine besonders einfache und wirtschaftliche Herstellung, weil es ausreicht, sich die Profilleiste auf Länge von einem extrudierten Profil abzuschneiden, das zum Beispiel aus Aluminium oder auch aus Kunststoff bestehen kann. Der Sicherheitspuffer mit bestimmter Länge wird dann einfach durch das stirnseitige Einsetzen von Abschlußkappen hergestellt und es kann dann der Schaumstoffkörper aufgeklebt werden, wobei dieser nur mit einer glatten Unterseite und nicht mehr, wie beim Stand der Technik, mit einem Hohlraum versehen werden muß. Die neue Ausgestaltung erlaubt daher eine wirtschaftliche Serienfertigung, die auch automatisierbar ist.

Die Merkmale der Ansprüche 10 und 11 schließlich bieten besondere Vorteile bei der Befestigung des Schaumstoffpufferkörpers auf der vormontierten Schalteinrichtung.

Die Erfindung ist anhand von Ausführungsbeispielen in der Zeichnung dargestellt und wird im folgenden beschrieben. Es zeigen:
- Fig. 1: eine Ansicht eines erfindungsgemäßen Sicherheitspuffers in Richtung I der Fig. 2, jedoch bei abgenommener Trägerplatte,
- Fig. 2: den Längsschnitt durch den Sicherheitspuffer der Fig. 1 und 3 längs der Linie II-II in Fig. 3,
- Fig. 3: den Querschnitt des Sicherheitspuffers der Fig. 1 und 2 längs der Linie III-III in Fig. 1,
- Fig. 4: eine andere Ausführungsform eines erfindungsgemäßen Sicherheitspuffers, bei dem eine Profilleiste verwendet wird und
- Fig. 5: einen Teil eines Längsschnittes durch den Sicherheitspuffer der Fig. 4.

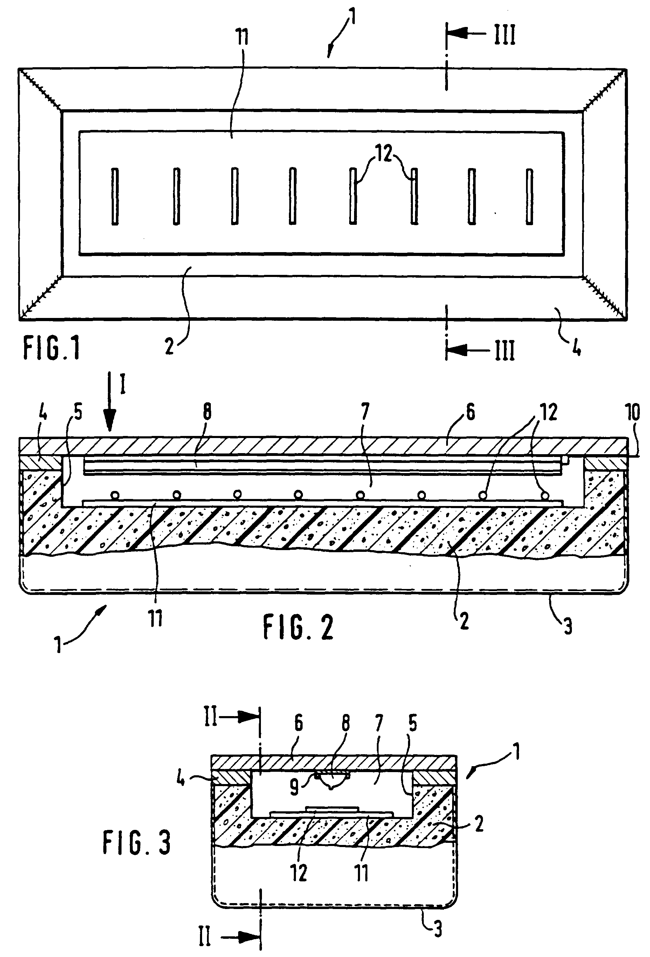

In den Fig. 1 bis 3 ist ein Sicherheitspuffer (1) gezeigt, der mit einem aus einem elastischen Schaumstoff bestehenden Pufferkörper (2) versehen ist, der außen mit einer undurchlässigen Außenhaut (3) versehen ist, die dicht mit einem umlaufenden Metallrahmen (4) verbunden ist, an dem auch der Schaumstoffkörper (2) angeklebt ist. Der Schaumstoffkörper (2) weist eine rechteckige Ausnehmung (5) auf, die mit einer den hinteren Abschluß des Sicherheitspuffers (1) bildenden Trägerplatte (6) einen Hohlraum (7) im Inneren des Pufferkörpers (2) bildet, in dem, wie noch beschrieben werden wird, eine Schalteinrichtung angeordnet ist, die dann, wenn äußere Kräfte auf den Pufferkörper (2) quer zur Ebene der Trägerplatte (6) einwirken, einen Kontakt auslöst. Die Trägerplatte bildet die hintere Abschlußwand des Hohlraumes (7). Die in ihr vorgesehenen, nicht gezeigten Öffnungen, die den Druckausgleich aus dem Hohlraum (7) bei Verformung des Schaumstoffkörpers (2) ermöglichen, sind daher auf der Seite des Sicherheitspuffers (1) vorgesehen, mit der dieser an dem abzusichernden Teil montiert wird.

Die Schalteinrichtung besteht aus einer an sich bekannten Schaltleiste (8), die aus einem in einem Tragprofil (9) gehaltenen elastischen, schlauchartigen Profil besteht, in dem nach außen abgedichtet Kontaktstreifen angeordnet sind, die miteinander in Berührung kommen, wenn das elastische Profil der Schaltleiste (8) außen berührt wird. Die Schaltleiste (8) besitzt elektrische Zuführungen (10), welche beim Ausführungsbeispiel abgedichtet zwischen der Trägerplatte (6) und dem Rahmen (4) herausgeführt sind, mit dem die Trägerplatte (6) dicht verbunden, beispielsweise verschraubt, verschweißt oder auch einstückig hergestellt ist.

An der der Trägerplatte (6) gegenüberliegenden Wand des Hohlraumes (7) ist eine elastisch biegsame Druckleiste (11) angebracht, beispielsweise angeklebt. Die Druckleiste (11) kann beispielsweise aus einem elastischen Kunststoffstreifen bestehen, der unmittelbar an dem Schaumstoff des Pufferkörpers (2) angeklebt ist. Auf dieser Druckleiste (11) sind Erhebungen in Form von Stegen (12) vorgesehen, die - wie Fig. 3 zeigt - quer zur Längsrichtung der Schaltleiste (8) verlaufen und gleichmäßig über die Länge der Druckleiste (11) verteilt im Abstand zueinander angeordnet sind. Die Länge der Stege (12), ist so bemessen, daß auch dann, wenn der Pufferkörper (2) nicht exakt senkrecht zur Trägerplatte (6) durch äußere Kräfte verformt wird, dennoch eine Berührung zwischen einem der Stege (12) und der Schaltleiste (8) erfolgt, wenn sich durch die auf den Pufferkörper (2) ausgeübten äußeren Kräfte die elastische Druckleiste (11) durchbiegt. Der Abstand der Druckleiste (11) von der Schaltleiste ist beim Ausführungsbeispiel vergrößert dargestellt. Die Anordnung kann auch so getroffen werden, daß die Stege (12) der Druckleiste (11) die Außenhülle der Schaltleiste (8) leicht berühren, damit die Schaltempfindlichkeit und die Schaltzeit so gering als möglich sind.

Die punktförmige Berührung zwischen der Schaltleiste (8) und einem der Stege (12) führt zur Auslösung des Schaltvorganges, wenn von außen Druck auf den Schaumstoffkörper (2) ausgeübt wird. Beispielsweise kann dann der Antrieb eines fahrerlosen Flurförderwagens abgestellt werden, an dem der Sicherheitspuffer (1) vorne befestigt ist. Fährt ein solcher Flurförderwagen daher in unvorhergesehener Weise auf eine die Fahrbahn kreuzende Person auf, so kann sofort der Antrieb des Wagens abgeschaltet werden. Selbstverständlich lassen sich die neuen Sicherheitspuffer auch überall da einsetzen, wo bisher schon Sicherheitspuffer verwendet worden sind. Vorteilhaft ist aber die relativ robuste Bauweise, die aber dennoch keine Nachteile hinsichtlich der Ansprechempfindlichkeit der Sicherheitseinrichtung mit sich bringt.

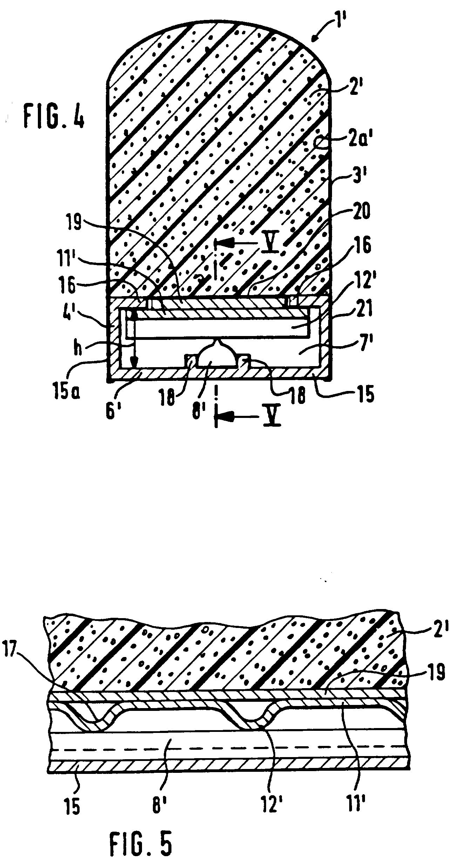

Die robuste Bauweise kann gemäß der Ausführungsform der Fig. 4 und 5 noch wesentlich verbessert werden. Bei der Ausführungsform der Fig. 4 und 5 ist die Trägerplatte (6'), an der die Schaltleiste (8') angebracht ist, und der Rahmen (4') jeweils Teil einer einstückig hergestellten Profilleiste (15), die beispielsweise aus Aluminium bestehen kann und in bekannter Weise extrudiert ist und dann nur noch auf Länge geschnitten werden muß. Diese Profilleiste (15) weist ein C-Profil auf und besitzt am oberen Rand der seitlichen Rahmenteile (4') einen nach innen gerichteten Rand (16), der somit den Hohlraum (7'), in dem die Schaltleiste (8') angeordnet ist, teilweise nach oben abdeckt. An der zum Hohlraum (7') hingewandten Innenseite dieses Randes (16) liegt die Druckleiste (11') beidseitig an, die beim Ausführungsbeispiel, wie insbesondere der Fig. 5 entnommen werden kann, als ein durchgehendes, mit Auswölbungen (17) versehenes Stegprofil ausgebildet ist, wobei diese Auswölbungen (17) die Stege (12') bilden, die an der Schaltleiste (8') anliegen. Aufgrund dieser Ausgestaltung wird die Druckleiste (11') elastisch gegen den Rand (16) gedrückt. Die Abmessungen von Druckleiste und Stegen (12'), die Höhe der Schaltleiste (8') und die lichte Höhe (h) der Profilleiste (15) lassen sich dabei in einfacher Weise so abstimmen, daß die gewünschte Anlage der Druckleiste (11') am Rand (16) einerseits und mit den Stegen (12') andererseits an der Schaltleiste (8') bewirkt wird.

Wie Fig. 4 zeigt, ist die Profilleiste (15) in ihrer Mitte mit zwei parallel zueinander verlaufenden Rippen (18) versehen, die zwischen sich eine Nut zur Aufnahme der Schaltleiste (8') bilden.

Um eine satte Anlage der Druckleiste (11') am Pufferkörper (2') zu gewährleisten, ist eine Erhöhung der Druckleiste (11') im Bereich zwischen den einander zugewandten freien Enden der Ränder (16) vorgesehen, welche beim Ausführungsbeispiel die Form eines flachen Streifens (19) hat, der mit der Druckleiste (11') verklebt ist. Natürlich wäre es auch möglich, die Druckleiste (11') mit dem Erhöhungsstreifen (19) einteilig herzustellen, wenn dies zweckmäßiger erscheint. Durch die gewählte Ausführungsform liegt die Druckleiste (11') unmittelbar an der Unterseite (20) des Pufferkörpers (2') an, der mit dieser Unterseite (20) in seinen seitlichen Außenbereichen auf die ihm zugewandte Oberseite der Ränder (16) aufgeklebt ist. Der Pufferkörper (2'), der ja ein Schaumstoffkörper ist, läßt sich in sehr einfacher Weise mit der unteren geraden Abschlußseite (20) versehen. Die Verbindung mit der Profilleiste (15) ist ebenfalls problemlos.

Beim Ausführungsbeispiel ist der Pufferkörper (2') noch mit einer ihn nach außen abdichtenden Außenhaut (3') versehen. Diese Außenhaut reicht bis in den Bereich der Seitenwände (15a) der Profilleiste (15). Sie ist in diesem Bereich über ein zwischen ihr und der Seitenwand (15a) vorgesehenes gitterartiges Gewebeband (21) mit der Seitenwand (15a) verbunden, das auch noch in einen Teil der Seitenwände des Pufferkörpers (2') übergeht und ebenfalls mit diesen verbunden, insbesondere verklebt ist. Zu diesem Zweck fluchten die beiden parallelen Seitenwände (2a') des Pufferkörpers (2') des in den Fig. 4 und 5 gezeigten Sicherheitspuffers (1') mit den Außenwänden (15a) der Profilleiste (15). Die Anordnung des Gewebebandes (21) sichert eine innige Verbindung zwischen Pufferkörper (2') und der Profilleiste (15) einerseits und der Außenhaut (3') mit dem gesamten Sicherheitspuffer (1') andererseits zu. Diese Art der seitlichen Befestigung unterstützt daher die Klebverbindung des Pufferkörpers (2') auf der Oberseite der Ränder (16).

Wie die Fig. 4 und 5 ohne weiteres zeigen, erlaubt die gezeigte Ausführungsform eine komplette Vormontage des aus der Profilleiste (15), der Schaltleiste (8') und der Druckleiste (11') mit der Erhöhung (19) bestehenden Schalteinrichtung. Der stirnseitige Abschluß erfolgt in einfacher Weise durch dem Profil der Profilleiste (15) angepaßte Stöpsel, die im Bereich der Rippen (18) und der darin geführten Schaltleiste (8') eine entsprechende Ausnehmung aufweisen können. Diese Stöpsel können auch ohne weiteres mit Auslaßöffnungen für die elektrischen Leitungen versehen sein. Die gesamte bereits vormontierte Schalteinrichtung kann dann in einfacher Weise mit dem Pufferkörper (2') in der geschilderten Weise verklebt werden.

## Patentansprüche

1. Sicherheitspuffer mit einem aus elastischem Schaumstoff bestehenden Pufferkörper (2) mit einer Trägerplatte (6, 6') und einer elektrischen Schalteinrichtung in der Form einer streifenförmigen und bei äußerem Druck auf den Pufferkörper schaltenden Kontaktanordnung,
**dadurch gekennzeichnet, da**ß
die Trägerplatte (6, 6') mit einem Rahmen (4, 4') mit festen Wänden versehen ist und daß die Kontaktanordnung als eine an der Trägerplatte (6, 6') innerhalb des von dem Rahmen (4, 4') gebildeten Hohlraums (7, 7') befestigte, in sich abgedichtete Schaltleiste (8, 8') ausgebildet ist, der eine an der der Trägerplatte (6, 6') gegenüberliegenden Seite des Hohlraumes (7, 7') angeordnete, elastisch biegsame Druckleiste (11, 11') zugeordnet ist, die am Pufferkörper (2) anliegt.

2. Sicherheitspuffer nach Anspruch 1, dadurch gekennzeichnet, daß die Druckleiste (11, 11') mit Erhebungen (12, 12') zur Kontaktierung der Schaltleiste (8, 8') versehen ist und daß die Erhebungen (12, 12') als in der Längsrichtung der Druckleiste (11, 11') in gleichmäßigen Abständen zueinander verteilt angeordnete Stege (12, 12') ausgebildet sind, die quer zur Längsrichtung der Schaltleiste (8, 8') verlaufen.

3. Sicherheitspuffer nach Anspruch 1 oder 2, dadurch gekennzeichnet, daß der Rahmen (4, 4') mit einem mindestens auf den gegenüberliegenden Längsseiten verlaufenden, nach innen gerichteten Rand (16) versehen ist und daß die Druckleiste (11') an der Innenkante dieses Randes (16) anliegt.

4. Sicherheitspuffer nach Anspruch 3, dadurch gekennzeichnet, daß die Druckleiste (11') auf der von dem Rand (16) abgewandten Seite an der Schaltleiste (8') anliegt.

5. Sicherheitspuffer nach Anspruch 3 oder 4, dadurch gekennzeichnet, daß die Druckleiste (11') mit einer in den Bereich zwischen den aufeinander zugerichteten Innenkanten des Randes (16) hereinragenden Erhöhung (19) versehen ist.

6. Sicherheitspuffer nach Anspruch 5, dadurch gekennzeichnet, daß die Erhöhung (19) eine der Dicke des Randes (16) entsprechende Höhe aufweist.

7. Sicherheitspuffer nach Anspruch 3, dadurch gekennzeichnet, daß der Pufferkörper (2') auf die von der Schaltleiste (8') abgewandte Seite des Randes (16) aufgesetzt, insbesondere aufgeklebt ist.

8. Sicherheitspuffer nach Anspruch 3, dadurch gekennzeichnet, daß der Rahmen (4') und die Trägerplatte (6') Teile einer einstückigen Profilleiste (15) mit C-förmigem Querschnitt sind.

9. Sicherheitspuffer nach Anspruch 8, dadurch gekennzeichnet, daß die offenen Stirnseiten der Profilleiste (15) durch eingeschobene Verschlußstücke abgeschlossen sind.

10. Sicherheitspuffer nach Anspruch 1, 3 oder 8, dadurch gekennzeichnet, daß der Pufferkörper (2, 2') mit einer undurchlässigen Außenhaut (3, 3') überzogen ist, die dicht mit dem umlaufenden Rahmen (4) oder den Seitenwänden (15a) der Profilleiste (15) verbunden ist.

11. Sicherheitspuffer nach Anspruch 10, dadurch gekennzeichnet, daß unter der Außenhaut (3') im Bereich der Seitenwände (2a') des Pufferkörpers (2') und der Außenwände (15a) der Profilleiste (15) ein gitterartiges Gewebeband (21) vorgesehen ist, das zur Befestigung des Pufferkörpers (2') an der Profilleiste (15) einerseits und andererseits zur Befestigung der Außenhaut (3') am Pufferkörper (2') und an der Profilleiste (15) dient.

## Claims

1. A safety bumper with a bumper body (2) made of elastic foam with a bearing plate (6, 6') and an electrical switchgear in the form of a strip-shaped contact arrangement which contacts the bumper body when external pressure is exerted,
**characterised in that** the bearing plate (6, 6') is provided with solid walls and that the contact arrangement is designed as a sealed switch strip (8, 8') fixed to the bearing plate (6, 6') inside the cavity (7, 7') formed by the frame (4, 4') which has a flexible pressure pad (11, 11') positioned on the side of the cavity (7, 7') opposite the bearing plate (6, 6') which is adjacent to the bumper body (2).

2. A safety bumper in accordance with claim 1, characterised in that the pressure pad (11, 11') is provided with raised sections (12, 12') to make the contact with the switch strip (8, 8') and that the raised sections (12, 12') are designed as ridges (12, 12') which are spaced at equal distances along the pressure pad (11, 11') and run at right angles to the longitudinal axis of the switch strip (8, 8').

3. A safety bumper in accordance with claim 1 or 2, characterised in that the frame (4, 4') has an edge (16) which runs along the opposing longitudinal sides and is angled inwards, and that the pressure pad (11') lies adjacent to the inside of this edge.

4. A safety bumper in accordance with claim 3, characterised in that the side of the pressure pad (11') facing away from the edge (16) lies adjacent to the switch strip (8').

5. A safety bumper in accordance with claim 3 or 4, characterised in that the pressure pad (11') has a raised part (19) which protrudes into the area between the opposing inner faces of the edge (16).

6. A safety bumper in accordance with claim 3, characterised in that the height of the raised part (19) is the same as the thickness of the edge (16).

7. A safety bumper in accordance with claim 3, characterised in that the bumper body (2') is located, especially stuck, to the side of the edge (16) facing away from the switch strip (8').

8. A safety bumper in accordance with claim 3, characterised in that the frame (4') and the bearing plate (6') form a single profiled strip (15) with a C-shaped cross section.

9. A safety bumper in accordance with claim 8, characterised in that the open front parts of the profiled strip (15) are closed by means of inserted plugs.

10. A safety bumper in accordance with claims 1, 3 or 8, characterised in that the bumper body (2, 2') is covered with an impervious outer skin (3, 3') which is connected to the surrounding frame (4) or the side walls (15a) of the profiled strip (15).

11. A safety bumper in accordance with claim 10, characterised in that beneath the outer skin (3') in the region of the side walls (2a') of the bumper body (2') and the external walls (15a) of the profiled strip (15) is a mesh-like fabric tape (21) which serves firstly to fix the bumper body (2') to the profiled strip (15) and secondly to fix the outer skin (3') to the bumper body (2') and the profiled strip (15).

## Revendications

1. Butoir de sécurité comportant un corps de butoir (2), constitué d'un matériau mousse élastique, et comportant une plaque de support (6, 6') et un dispositif de connexion électrique se présentant sous la forme d'un montage de contact, en forme de bande et qui assure une connexion sous l'effet d'une pression extérieure exercée sur le corps de butoir, caractérisé en ce que la plaque de support (6, 6') est pourvue d'un cadre (4, 4') comportant des parois fixes, et que le montage de contact est conçu comme une baguette de connexion (8, 8'), étanchée en soi, fixée contre la plaque de support (6, 6') à l'intérieur de l'espace creux (7, 7') formé par le cadre (4, 4'), baguette de connexion à laquelle est attribuée une baguette de compression (11, 11'), qui peut subir une flexion élastique, qui est disposée contre le côté de l'espace creux (7, 7') opposé à la plaque de support (6, 6'), et qui s'appuie contre le corps de butoir (2).

2. Butoir de sécurité selon la revendication 1, caractérisé en ce que la baguette de compression (11, 11') est pourvue de protubérances (12, 12') pour assurer la mise en contact de la baguette de connexion (8, 8'), et que les protubérances (12, 12') sont conçues comme des traverses (12, 12'), réparties d'une manière équidistante les unes des autres dans la direction longitudinale de la baguette de connexion (11, 11'), traverses qui courent transversalement à la direction longitudinale de la baguette de connexion (8, 8').

3. Butoir de sécurité selon la revendication 1 ou 2, caractérisé en ce que le cadre (4, 4') est pourvu d'un bord (16), dirigé vers l'intérieur, courant au moins sur les côtés longitudinaux opposés, et en ce que la baguette de compression (11') s'appuie contre l'arête intérieure de ce bord (16).

4. Butoir de sécurité selon la revendication 3, caractérisé en ce que la baguette de compression (11') s'appuie, sur le côté opposé au bord (16), contre la baguette de connexion (8').

5. Butoir de sécurité selon la revendication 3 ou 4, caractérisé en ce que la baguette de compression (11') est pourvue d'une surélévation (19), en saillie dans la zone située entre les arêtes intérieures, dirigées l'une contre l'autre, du bord (16).

6. Butoir de sécurité selon la revendication 5, caractérisé en ce que la surélévation (19) a une hauteur correspondant à l'épaisseur du bord (16).

7. Butoir de sécurité selon la revendication 3, caractérisé en ce que le corps de butoir (2') est placé, en particulier par collage, sur le côté du bord (16) opposé à la baguette de connexion (8').

8. Butoir de sécurité selon la revendication 3, caractérisé en ce que le cadre (4') et la plaque de support (6') forment des éléments d'une baguette profilée monobloc (15) ayant une coupe transversale en C.

9. Butoir de sécurité selon la revendication 8, caractérisé en ce que les faces frontales ouvertes de la baguette profilée (15) sont obturées par des pièces d'obturation insérées.

10. Butoir de sécurité selon la revendication 1, 3 ou 8, caractérisé en ce que le corps de butoir (2, 2') est revêtu d'une peau extérieure imperméable (3, 3'), qui d'une manière étanche est reliée au cadre (4) qui l'entoure, ou aux parois latérales (15a) de la baguette profilée (15).

11. Butoir de sécurité selon la revendication 10, caractérisé en ce qu'on prévoit, en-dessous de la peau extérieure (3'), dans la zone des parois latérales (2a') du corps de butoir (2') et des parois extérieures (15a) de la baguette profilée (15) une bande de tissu en treillis (21), qui sert d'une part à la fixation du corps de butoir (2') contre la baguette profilée (15), et d'autre part à la fixation de la peau extérieure (3') au corps de butoir (2') et à la baguette profilée (15).
